# EUROPÄISCHE PATENTSCHRIFT

(11) **EP 1 177 381 B1**
(45) Veröffentlichungstag und Bekanntmachung des Hinweises auf die Patenterteilung: **06.08.2003**
(21) Anmeldenummer: 00938544.4
(22) Anmeldetag: 04.05.2000
(51) Int. Cl.: F03D 3/04

(54) **WINDKRAFTANLAGE MIT VERTIKALROTOR**
WIND POWER FACILITY WITH A VERTICAL ROTOR
CENTRALE EOLIENNE A ROTOR VERTICAL

(30) Priorität: 05.05.1999 DE 19920560
(43) Veröffentlichungstag der Anmeldung: 06.02.2002
(73) Patentinhaber: Heineck, Roland, 09221 Neukirchen (DE)
(72) Erfinder: Themel, Ramona, 08060 Zwickau (DE)
(74) Vertreter: Rohrschneider, Gottfried
(86) Internationale Anmeldenummer: DE0001487
(87) Internationale Veröffentlichungsnummer: WO00068569

(56) Entgegenhaltungen:
- WO-A-91/19093
- DE-A- 19 623 055
- DE-A- 19 823 473
- DE-U- 29 704 024
- FR-E- 22 596
- GB-A- 2 049 066
- US-A- 4 047 834
- US-A- 5 463 257

## Beschreibung

Die Erfindung betrifft eine Windkraftanlage mit Vertikalrotor zur Energiegewinnung, wobei ein dreiflügliger Rotor Einsatz findet. Dabei arbeitet der dreiflüglige Rotor mit einer Rotorachse, welche vertikal im Wind steht. Das Einsatzgebiet für die erfindungsgemäße Windkraftanlage mit Vertikalrotor ist sowohl der Eigenheimbereich, als auch der Industriebereich. Außerdem ist der Einsatz dieser Windkraftanlagen zweckdienlich in Windparks, auf Gebäudedächem und auch auf Schiffen möglich.

Mit der DE 31 29 660 ist ein Windrad zur Umsetzung von Windenergie in eine Rotationsbewegung bekannt, bei welchem für eine Windkraftmaschine, mit einem mit einer Mehrzahl von Rotorblättem ausgebildeter Rotor, dessen Rotorachse etwa senkrecht zur Ebene der möglichen Windrichtung steht, eine Erhöhung des Wirkungsgrades dadurch erreicht werden soll, indem der Rotor von einem Stator umgeben ist, der eine Vielzahl von gleichbeabstandeten Statorblättem aufweist, welche schräg zum Rotor verlaufende und auf eine seitliche Umfangfläche des Rotors mündende, sich zum Rotor hin verjüngende Kanäle bilden.

Diesem Windrad und ihrer Anlage haftet jedoch der Nachteil an, daß sie einen zu geringen Teil der im Wind stehenden Einleitflächen zum Umsetzen in Energie nutzt. Ursache hierfür ist der Umstand, daß die Einleitflächen zu flach anliegen, wodurch etwa ein Viertel der Windkraft nicht zum Tragen kommt und nach außen geleitet wird. Da der Rotor ohne Durchströmung arbeitet, wird auch die dringend notwendige Strömungsgeschwindigkeit von etwa 15% unterschritten. Bestenfalls ist dieser Rotor nur in der Lage, etwa 15% der Windkraft aus dem Bereich der Druckkraft umzusetzen. Das hat zur Folge, daß unter Last die Leistung erheblich abbaut.
Diese Anlage ist deshalb für geringe Windgeschwindigkeiten nicht geeignet. Der Rotor und die Einleitflächen gewährleisten in der gewählten Anordnung kein effektives Zusammenwirken.

Femer ist mit der Schrift WO 81/ 00463 eine weitere Windkraftanlage bekannt. Diese Anlage verfügt über 12 Einleitflächen, welche aber zu flach ausgestaltet sind, und wobei die horizontal angeordneten Einleitflächen zu steil angestellt sind.
Damit ist der Nachteil verbunden, daß sich ein unerwünscht hoher Druck aufbaut, wodurch es zu Rückströmungen kommt. Der Rotor besitzt 24 Schaufeln und arbeitet ohne Durchströmung, wobei die etwa 15% notwendige Strömungsgeschwindigkeit nicht realisiert werden, welche aber dringend benötigt werden. Da nur die Druckkraft im Rotor arbeitet, können nur etwa 15% der Windkraft auch umgesetzt werden. Unter Last bricht die Leistung zusammen, weshalb diese Anlage für niedrige Windgeschwindigkeiten im Bereich von vorzugsweise 1 m/s bis 3 m/s nicht geeignet ist. Die Druckkraft arbeitet in den Rotorflügeln nur bis zum Leitflächenende und überträgt den Druck nachfolgend in das nächste Fach, wo dieser dann unerwünscht zum Gegendruck wird.

Ferner ist mit der DE 30 01 385 eine weitere Lösung bekannt. Hierbei besteht der Rotor aus Schaufeln, wodurch er für eine zweckdienliche Durchströmung nicht geeignet ist. Die gewählte Lösung mit12 Einleitflächen ermöglicht durch eine zu flache Anstellung nicht eine optimale, daß heißt größtmögliche Windangriffsfläche, wodurch die Schaufeln nur den Druck aus der Windkraft umsetzen. Die Schaufeln im Rotor entladen den Druck im nachfolgenden Einleitfach, wodurch es wiederum zu unerwünschten Gegenströmungen kommt. Auch bei dieser gewählten Lösung ist der Nachteil zu verzeichnen, daß die Leistung sehr schnell abbaut und die Nutzung einer Windgeschwindigkeit in den Größen von nur 1 m/s bis etwa 3 m/s nicht möglich ist.

Weiterhin ist mit der WO 91/ 19093 "VALSAMIDIS"eine Lösung bekannt, welche auf dem Prinzip der Durchströmung arbeitet, wobei die Kräfte aus dem Wind in Form des Druckes sowie des Segelzuges genutzt werden. Dabei werden 16 Einleitflächen auf einen achtflügligen Rotor abgestimmt. Die Leitflächen weisen als Charakteristika eine konische Form auf, die aber für das Ansteigen der Strömung keine Verbesserung bringt, zumal die Leitflügelkonstruktion zu schmal ausgeführt ist. Eine variable Ausgestaltung der Neigungswinkel erübrigt sich, weil bei einem exakt ausgerichteten Verhältnis zwischen Rotorflügeln und Einleitflächen eine Konstante auftritt, die eine etwa 15%ige Durchströmung realisiert. Die in der Lösung VALSAMIDIS offenbarten Leitflügel haben zudem die Druckseitentangente der aerodynamischen Ausgestaltung konstruktiv auf der falschen Seite angeordnet. Die lösungsgemäß beschriebenen runden Öffnungen im Zentrum dieser Anlage nimmt den Durchströmungsflügeln die Möglichkeit der Strömungsumsetzung. Dazu kommt noch die Offenbarung, daß die Abdeckplatte und die Grundplatte gelocht sein kann, wodurch die Strömung nachteilig an einer nicht arbeitenden Stelle nach außen tritt. Die Flügel dieser Lösung sind wie ein Viertelmond sichelförmig ausgeführt. Aus dem Flugzeugbau ist jedoch bereits bekannt, daß diese Flügelform denkbar schlechte Auftriebswerte besitzt. Die gewählte Konstruktion mit ihrem aufgezeigten Einleitflächenprinzip erbringt eine Nutzung von etwa 85% der Windfläche am Bauwerk, beziehungsweise an der Anlage. Die offenbarte Einleitflächenausstellung stellt eine relativ günstige Ausführungsform dar, ohne jedoch dem Idealzustand nahe zu kommen. Auf solche Weise wird der Wind nach außen abgefälscht, woraus letztlich ein Kapazitätsverlust zu verzeichnen ist. Trotz der gegebenen Durchströmfähigkeit bilden die acht Rotorflügel in sich einen Trichter, der das Durchströmen behindert. Bei der gewählten Rotorflügelform sind diese zu kurz ausgeführt, wodurch der Wind auch einen zu kurzen Arbeitsweg beschreitet. Dadurch arbeitet in dieser Anlage nur der Winddruck und der Segelzug, bei fehlender günstiger Aerodynamik. Die Durchströmluft arbeitet nicht von innen nach außen, weil die Luft entgegen dem Trichterverhalten der Flügel nicht wirksam wird. Der Abstand zwischen dem Rotor und dem Einleitflächengehäuse wirkt nachteilig, weil er zu groß ausgeführt ist. Die horizontalen Einleitflächen, die einen solchen Verlust verhindern könnten, fehlen in dieser Anlage.
Die Erfindung stellt sich daher die Aufgabe eine Windkraftanlage mit Vertikalrotor und zugehörigen Leitflächen zu schaffen, welche optimal alle nur möglichen Windkräfte auch in Energie umsetzt. Besonderes Augenmerk wird dabei auf ein bestmögliches Zusammenwirken und Umsetzung aller aus dem Wind nutzbaren Kräfte gelegt.

Außer der vielfältigen Nutzung umgesetzter Windenergien, wird ferner auf eine verwertbare Frequenzkonstanz und eine günstig angepasste, ausgewogene Gewichtsverteilung geachtet, welche im Zusammenwirken von Einleitflächenelementen, Rotor, Rotorflügeln und Bauwerk zu verzeichnen ist. Dabei besteht die erfindungsgemäße Aufgabe besonders auch darin, daß bereits bei 1,5 m/s Windgeschwindigkeit die Arbeit zur Energiegewinnung aufgenommen wird. Ferner steht die Aufgabe, daß auch bei orkanartigen Situationen die Windkraftanlage zuverlässig arbeitet und nicht aus dem Wind genommen werden muß. Das hat auf solche Art und Weise zu geschehen, daß die Anlage auch die hohen Windgeschwindigkeiten ohne zu bremsen voll zur Energiegewinnung nutzt. Dabei ist die Anlage jedoch für extrem hohe Windgeschwindigkeiten mit einem Selbstschutz ausgestattet, wodurch ein Druckpolster vor Zerstörung schützt. Es steht weiterhin die Aufgabe, daß das gesamte Bauwerk aus einer ausgewogenen Einleitflächenstatik besteht und keine zusätzlichen Bauteile die Funktion der Windkraftanlage behindern, beziehungsweise platzmäßig einschränken. Die erfindungsgemäße Windkraftanlage stellt sich weiter die Aufgabe, daß die einzelnen Baugruppen derart harmonisch aufeinander abgestimmt sind, daß die verschiedenen auftretenden Kräfte und Geschwindigkeiten in keiner Phase des Betriebes sich behindern oder gar aufheben. Dazu soll das Bauwerk eine geschlossene Einheit bilden und die Form sowie das Aussehen eines säulenartigen Turmes besitzen, wobei die Anlage vor Witterung geschützt ist. Das Bauwerk soll dabei nicht nur der Natur angepaßt sein, sondern auch eine gute Werbemöglichkeit bieten. Schließlich sollen kostengünstige Materialien zum Einsatz gelangen und die Anlage einfache, aber robuste Technik verkörpern, bei welcher der Magnuseffekt hinter der Anlage wie ein starker Sog zum Tragen kommt.

Die Aufgabe der Erfindung wird gelöst, durch die im kennzeichnenden Tei des Anspruchs 1 aufgezeigten technischen Merkmale.

Lösungsgemäß besteht die erfindungsgemäße Windkraftanlage aus einem Fundament, auf dem ein Maschinenraum aufgesetzt ist. Femer aus einer zylindrischen Einleitflächenkonstruktion, welche in mehreren zweckdienlich angeordneten Etagen für die jeweilige Bauhöhe ausgeführt ist. Im Fundament sind Ständer für eine vorteilhaft mehreckige Konstruktion des Maschinenraumes angeordnet. Die zylindrische Säule des Turmes ist auf dem Dach des Maschinenraumes angeordnet. Der zylindrische Aufbau der Einleitflächenkonstruktion besteht aus einem Einleitflächenaußenring, der eine unterschiedliche Anzahl von Etagen aufweisen kann.

Jede einzelne Etage besteht in ihrem Aufbau aus einer Oberboden- und einer Unterbodenbegrenzung. Dazwischen sind insgesamt zwölf vertikale Einleitflächenelemente angeordnet. Diese sind die einzigen Statikteile zwischen den Etagenböden. Die Etagenböden sind mit den zugehörigen Einleitflächenelementen durch vorzugsweise Verschweißung sicher verbunden und sitzen auf dem Dach des Maschinenraumes auf. In der Mitte der Anlage befindet sich ein zylindrischer Schacht, welcher durch die gesamte Anlage bis hinunter in den Maschinenraum reicht. Die obere letzte Etage ist als Abschluß mit einem vorzugsweise kegelförmigen Dach versehen. Die Rotorachse reicht bis auf den Boden des Maschinenraumes. Im zylindrischen Schacht ist eine vertikale Rotoranlage angeordnet. Diese besteht aus einer mittig angeordneten Rotorachse und den einzelnen Rotoretagen mit drei Flügeln je Etage. In der Rotorachse ist ein Generator positioniert, wobei der Sitz der spezifischen Wicklung und die Plazierung der Permanentmagnete spiralförmig versetzt erfolgt. Auf solche Weise befindet sich der Generator um den Kem der Achse und erstreckt sich über die gesamte Länge derselben. Damit wird eine optimale Platzauslastung bei guter Energieausbeute erreicht, wobei die jeweilige Länge des Generators immer an die gewählte Bauausführung, in der Hauptsache auf die Anzahl der Etagen und auch der einzelnen Etagenhöhen bezogen, angepaßt ist.
Die vertikalen Einleitflächenelemente und der Rotor sind so konstruiert, daß der Rotor gegen den Uhrsinn läuft. In jeder Etage der Einleitflächenkonstruktion befinden sich oberhalb und unterhalb der Einleitfächer horizontale Einleitflächenelemente, welche sich in einer Spanne von 10° bis 15° nach innen ansteigend befinden und nicht gekrümmt, aber auch nicht aerodynamisch ausgebildet sind. Bei zu steilen horizontalen Einleitflächenelementen kommt es ansonsten zum Rückstau und die Folge wäre das Absinken der dringend benötigten Windgeschwindigkeit zur Energiegewinnung. Gleiches gilt ebenso für die Rotorflügel. Insgesamt ist die Konstuktion von Einleitflächenelementen und Rotorflügeln darauf gerichtet, daß für die Durchströmung eine größtmögliche Windgeschwindigkeit erhalten bleibt, da sonst als Folge ein Leistungsrückgang zu verzeichnen ist. Die erfindungsgemäße Windkraftanlage ist dazu mit einem idealen Durchströmrotor ausgestattet, welcher drei besonders gestaltete Flügel besitzt Die drei aerodynamisch und gekrümmt gestalteten Flügel stehen dabei derart zueinander, daß die Windgeschwindigkeit durch keinen Arbeitsgang im Rotor zum Absinken gezwungen wird. Selbst wenn der Rotor gerade bei einer Windgeschwindigkeit von etwa 0,5 m/s anläuft, beginnt sich sofort die Durchströmung aufzubauen. Die Anstellwinkel der Flügel des Rotors stehen im Zusammenwirken der Anstellwinkel der vertikalen Einleitflächenelemente und sind solchermaßen aufeinander abgestimmt. Der Anstellwinkel der Flügel des Rotors ergibt sich aus dem Abstand der Rotorachsenmitte zum jeweiligen Flügelende und der vorderen Begrenzung der Flügelnase die an die Linie stößt, welche durch die Mitte der Rotorachse läuft. Die Öffnungen zwischen jeweils zwei Flügeln die zur Durchströmung zwingend gegeben sein muß, steht dabei in einem engen Verhältnis zur Flügeltiefe. Legt man den mittleren Maßwert der Flügeltiefe zugrunde, so ist der fünffache Abstand von der Rotormitte bis zum jeweiligen Flügelende gemessen die Länge der äußeren Flügelkrümmung. In der Praxis läßt sich das einfach mit einem Faden abstecken. Die Flügelausbildung des Rotors entspricht in der Krümmung der des Schnelläufers nach dem Prinzip Schulz als dreiflügliger Durchströmrotor, welcher aus dem System des Savonius-Rotors hervorging.
Mit der Form der Flügelkrümmung wurde bei dem erfindungsgemäßen Rotor eine optimale Aerodynamik eingebracht und erreicht. Damit eng verbunden ist die Ausgestaltung der Flügelförm an ihrer Frontseite mit einer gekrümmten Nase. Dadurch wird erreicht, daß während der Rotation der sich diskontinuierlich, aber fließend verändernde Anströmwinkel aerodynamisch immer günstiger wird. Je nach Anströmwinkel verändert sich lediglich die Dicke des Rotorflügels. Der positive Effekt der gekrümmten Flügelnase der Frontseite wird bei der erfindungsgemäßen Ausgestaltung auch noch wirksam bis zum minimalen Ansatz der Nasenkrümmung, die entgegengesetzt zur Drehrichtung zeigt. Diese Spanne bildet den Idealbereich. Durch die gewölbte Form der Rotorflügel, unabhängig davon wie die Nase ausgeprägt ist, wird verursacht, daß der Segelzug beim Eintauchen in das Einleitfach besonders ergiebig arbeitet. Bei Ausführung der Rotorflügel mit einer gleichförmig gestreckten Tragflächenform stünde keine hinreichend große Fläche für einen energiegewinnenden Segelzug zur Verfügung. Da mit der aerodynamischen Form der Rotorflügel die Windkraft am günstigsten umgesetzt wird, benötigt sie den Segelzug als Anfangsgeschwindigkeit im vorangegangenen Arbeitsgang. Der Segelzug wirkt somit als Bindeglied, damit die Trägheit im Rotor überwunden wird und ein fließender ungestörter Bewegungablauf der Rotation gewährleistet wird. Somit wird letztlich durch günstige aerodynamische Ausgestaltung eine höchstmögliche Geschwindigkeit erzielt und eine optimale Energiegewinnung erreicht. Dazu arbeitet die Aerodynamik im äußeren Bereich der Rotorflügel bis hin zur vorderen Linie der gekrümmten Nase. Der Segelzug arbeitet auf der oberen Krümmung der Flügel gleitend von hinten nach vom. Der Winddruck arbeitet im schweren Druckbereich des Hebels im langsameren Innenbereich der Rotorflügel. Die Rotorflügel stehen dabei so ideal zueinander, daß Segelzug und Aerodynamik die bestmögliche Durchströmung der Windgeschwindigkeit ohne Behinderung gewährleisten, was prinzipiell nur bei einem Anwendungsfall von drei Flügeln im Rotor möglich ist, da sie den besten Anstellwinkel für die Durchströmung besitzen. Bei der Anordnung mit vier Flügeln versperrt immer ein Flügel zumindest partiell eine reibungslose natürliche Durchströmung, vergleichbar mit einer im rechten Winkel stehenden Wand. Die Folge ist bei dieser Ausführungsvariante eine Reduzierung der Geschwindigkeit durch den entstehenden Bremswiderstand.
Wird ein zweiflügliger Rotor als Ausführungsvariante gewählt, durchströmt der Wind diesen bei zusätzlich ungünstiger Flügelstellung und Flügelform sogar ohne Verrichtung einer Arbeit und Verschenkung von Energie.
Beim Einsatz von mehr als vier Rotorflügeln baut sich zwangsweise durch Verbauung und gegenseitige Behinderung eine Art Luftpolsterbremsung auf, welche eine ungünstige Rotationskonstanz zur Folge hat. Dieser Zustand tritt bei dreiflügligen Rotoren erst bei Orkanstärken ein, wodurch aber auch gleichzeitig eine erwünschte Schutzfunktion in Kraft tritt. Die Abstimmung der vertikalen Einleitflächenelemente auf den Rotor erfolgt derart, daß bei orkanartigen Winden die vertikalen Einleitflächenelemente maximal gefüllt werden und mit der Gegenströmung als Luftpolster wirken. Den Einleitflächenelementen kommt die besondere Aufgabe zu, die in der Windrichtung zurücklaufenden Rotorflügel vor dem Wind abzudecken. Der Wind drückt also nicht auf die Gegenseite des Flügelbereiches, sondern der abgeleitete Wind wird zusätzlich auf die positiv arbeitende Seite gelenkt.
Durch eine leichte Schrägstellung wird der Wind schon im Vorfeld auf die Rotation vorbereitet. Bei insgesamt zwölf vertikalen Einleitflächenelementen wird der Anstellwinkel so gestaltet, daß das erste vertikale Einleitflächenelement und das vierte Einleitflächenelement einen Winkel von 90° ergibt und drei Flächen umfaßt Im Angriffsfeld der Windfläche an der Anlage arbeitet jeder Flügel des Rotors nacheinander über vier Einleitfächer. Diese Ausführung besitzt den Vorteil, daß jedes Einleitfach eine neue und höhere Anfangsgeschwindigkeit erhält und der Druck, welcher durch die Durchströmung bewirkt wird, auch noch im fünften, bis hin zum neunten Fach arbeitet. Durch den zweiten Flügel des Rotors wird im zehnten und elften Einleitfach eine Restarbeit geleistet. Im hinteren Bereich der Anlage entsteht ein Sog als Magnuseffekt, der sich wie ein Mantel herumlegt. Durch die Linksdrehung des Rotors kommt es auf der rechten Seite der Einleitflächenelemente nochmals zu einer Einströmung von mindestens zwei Einleitfächem, obwohl diese vom Wind nicht mehr frontal erfaßt werden.
Die zweieinhalbfache Tiefe der vertikalen Einleitflächenelemente entspricht dem Durchmesser des Rotors. Von der durch die Mitte des Rotors gezogenen Linie haben die vertikalen Einleitflächenelemente eine Abweichung von 36° bis 38° entgegengesetzt zur Drehrichtung des Rotors geneigt. Die vertikalen Einleitflächenelemente können wahlweise geradförmig, als auch gekrümmt ausgeführt sein, wobei die Krümmung nicht größer sein darf als die Schrägstellung und

Krümmung der Rotorflügel. An den Vorderkanten der vertikalen Einleitflächenelemente ist eine aerodynamische Aufwölbung angebracht. Als Vorzugsvariante eines optimal wirkenden vertikalen Einleitflächenelmentes dient die gekrümmte Form mit aerodynamisch gewölbter Kopfform, welche jedoch in keiner Weise der gekrümmten Nasenform der Rotorflügel entsprechen darf. Dieser Unterschied kommt dadurch zustande, weil die vertikalen Einleitflächenelemente keiner Rotation unterworfen sind, wie der Rotor. Damit ist gleichzeitig der Vorteil verbunden, daß der entstehende Druck aus der Drehung dem Flettner-Effekt entgegenwirkt und die Statik am gesamten Bauwerk ausgeglichen und beruhigt wird. Hingegen weisen andere Anlagen bei sehr hohen Windgeschwindigkeiten bekanntermaßen Schwingungen auf, welche im Extremfall eine Zerstörung der gesamten Anlage verursachen.

Erfindungsgemäß wird der Flügel konstruktiv wie folgt ausgeführt:
Die Flügel im Rotor ergeben einen Bereich der idealen Funktionstüchtigkeit in verschiedenen Windgebieten. Der Funktionsbereich beginnt bei der aerodynamischen Form, wie sie schon bei den vertikalen Einleitflächenelementen beschrieben wurden. Diese kann an der Unterseite so weit ausgespart werden, daß an ihrem vorderen Ende eine regelrechte Nase entgegengesetzt zur Drehrichtung entsteht. Von der Nase aus geht über die gesamte Flügeltiefe eine nahezu parallele Wandung beziehungsweise Profildicke hervor, die sich am hinteren Ende auf den letzten etwa 10% Länge, zur Spitze bildet. Die gesamte Krümmung des Flügels bis hin zur Nase entspricht der Linienform des Schnelläufers nach Schulz. Erfindungsgemäß erfolgt hierzu noch eine weiterführende aerodynamische Anpassung. Diese beiden Flügelformen und der Bereich dazwischen, bilden den erfindungsgemäß angewandten Idealbereich. Lediglich in windschwachen Gebieten wird bei der Ausgestaltung dieser Anlage ein Profil verwendet, welches eine besondere aerodynamische Form aufweist. Dieses Profil ist so gestaltet, daß die Druckseitentangente, nämlich die Unterseite des Flügels eine Gerade ist. Als Verhältnismaß bei einer Profillänge von 157 cm ist die größte Dicke des Flügels 28 cm. Die aerodynamische Profilausbildung erfolgt gleitend. Die Flügeltiefe besitzt einen Toleranzbereich. Die Öffnung zwischen den Flügeln, vom Ende der Flügel in Weiterführung zur Innenkrümmung des anderen, entspricht dem vierten Teil der Strecke von der Mitte der Rotorachse bis zum Außenrand des Rotors sowie auch dem Abstand zwischen der Mitte der Rotorachse bis zum Flügel, wenn die geführte Linie mit 90° auf den Flügel zeigt. Die von der Flügelnase gezogene Linie bis zur Mitte der Achse und der nach außen gehenden Linie zu 90° von der Achse aus, ergibt den mittleren Meßwert der Flügeltiefe des Profils. Daß heißt, 10% im Plusbereich und 10% im Minusbereich, also 100° und 80° ergeben die Spanne der Ideallänge der Flügeltiefe. Der fünffache Abstand von der Achsmitte zum Flügel über die Flügelkrümmung gemessen, ergibt die Profillänge.
Die Abmessung des Profiles der vertikalen Einleitflächenemente ergeben sich aus dem Verhältnismaß von 70 cm Länge, zur unteren Wölbung von 6 cm und der dicksten aerodynamischen Ausbildung von 7 cm, die in gleichmäßiger Verjüngung ausläuft. Die vertikalen Einleitflächenelemente sind radial angeordnet, wodurch die Windkraftanlage windrichtungsunabhängig ist. Der Einleitflächenaußenring besitzt eine Ausladung, welche einem Drittel des Rotordurchmessers entspricht.
Im einzelnen laufen die Arbeitsgänge in der erfindungsgemäßen Anlage wie folgt ab Wenn der Rotorflügel mit dem Rücken in das Anströmfeld des Einleitfaches eintritt, wird er vom Segelzug sogartig angezogen. Da das gesamte Einleitfach noch leer ist, strömt die Luft ungehindert am hereinkommenden Flügel vorbei und drückt zu fast 90° in die Innenkrümmung des vorhergehenden Flügels. Es ist die einzige Situation, bei welcher ein Flügel so steil angeströmt wird. Da aber der Segelzug den Rotor schneller bewegt als es der Winddruck im nachfolgenden Flügel realisieren kann, kommt es zu keinem frontalen Stau. Durch die nachfolgende Aerodynamik am ersten Flügel erhöht sich zwar die Windgeschwindigkeit im Rotorinneren, aber gleichzeitig katapultiert sich der vorangehende zweite Flügel in eine äußerst günstige Schräglage, die sich gleitend im Winkel der Anströmung bis auf Null reduziert. Aus der Anfangsphase heraus profitiert auch der dritte Flügel, weil durch die senkrechte Anströmung der Druck nach beiden Seiten auf Flügel zwei entweicht. Über die Mitte wird nun der dritte Flügel in einer Schräglage von 45° angeströmt. Durch das sofortige Ableiten des Druckes nach außen durch Flügel zwei, erhält der Flügel drei lediglich eine Art Druckimpuls. Die Flügel stehen in dieser Position so günstig zueinander, daß der Druck auf Flügel zwei in der Mitte des Flügels zum Tragen kommt und die noch geringe Windkraft auf dem dritten Flügel in seinem innersten Abschnitt wirkt. Die Anström- und Angriffsflächen arbeiten automatisch bei Abschwächung der Windgeschwindigkeit gleitend immer mehr am inneren und kurzen Hebel des Rotorflügels. Kommt nachfolgend der erste Flügel etwas weiter in das Einleitfach, beginnt die Arbeit der Aerodynamik. Der Überdruck und Unterdruck am Flügel bewirkt, daß der Wind nur in einer höheren Geschwindigkeit an den Flügelflächen in das Innere des Rotors strömt. Die höhere Geschwindigkeit wird aber auch für den vorhergehenden zweiten Flügel benötigt, weil die Strömung nicht mehr mit 90° auf die Fläche drückt, sondern gleitend von etwa 65° bis 0° wirkt. Der Durchströmeffekt erhöht sich, indem zuerst der kurze Hebel an der Innenwölbung bedient wird und dann gleitend auf den langen Hebel übergeht. Alle Kräfte bei dieser Durchströmung wirken genau an den Stellen, wo sie den größten Nutzen bringen. Die Aerodynamik arbeitet mit unterschiedlicher Kraft etwa zu 75% des Weges im Einleitfach. Die gekrümmte Flügelnase erlaubt eine stets relativ ideale Anströmung in einem gleitenden Arbeitswinkel. Nachdem die Flügelnase das Fach verlassen hat, beginnt der Winddruck auf den inneren Teil des Flügels zu drücken. Der Anströmwinkel beginnt von 0° bis 90° und nach der Rotationsdrehung des Flügels wieder von 90° bis 0°.
Von 0° bis 90° wird auch der zweite Flügel mit einer Schräge von 45° angeströmt. Der zweite Flügel wird aber konstant mit 45° angeströmt, weil die Windrichtung durch die Mitte des Rotors führt und nur in der Anströmkraft variiert.
Die stärkste Kraft wirkt bei 0° Anstellwinkel der Strömung im Innenbogen des ersten Flügels und verringert sich bis zur 90° Stellung. Die Arbeitsleistung reißt ab, wenn der erste Flügel die Strömung im Zuge der Rotation nach außen abkippt. Da aber vier Einleitfächer nacheinander in der gesamten Windangriffsfläche der Anlage auf jeden Flügel einwirken, kommt es zu einer vierfachen Taktverlängerung. Dabei kommt es zu Strömungsvermischungen, die sich in keiner Weise behindern, da jede Strömungsumsetzung an verschiedenen Stellen im Rotor arbeitet. Es entsteht ein ideales Zusammenwirken aller Umsetzungsmöglichkeiten der Windkraft, wobei der in Front stehende Flügel in jedem Einleitfach der Windangriffsfläche eine immer größere Anfangsgeschwindigkeit erhält. Der entstehende Sog des Magnuseffektes bedient im hinteren Bereich der Anlage noch weitere zwei Einleitfächer und arbeitet im restlichen hinteren Bereich als Diffusor. Der gesamte Rotor hat bei unterschiedlicher Etagenanzahl eine anders gewählte Versetzung der Flügelgruppen.
Die Etagenanzahl bestimmt die Gesamtaufteilung der Rotorflügel über die 360° des Umfanges. Bereits bei vier Etagen ist schon eine besonders günstige wie effektive Aufteilung der Flügelstellungen möglich. Damit ist eine ständige Idealstellung der Flügel in der Anlage gewährleistet. Das ermöglicht eine ausgeglichene Kraftverteilung am Rotor und sorgt für eine optimale Frequenzkonstanz. Desweiteren trägt auch die Masse des Rotors zur Frequenzkonstanz durch seinen Schwungradeffekt bei. Die vertikalen und horizontalen Einleitflächenelemente und die Flügel sind starr und unbeweglich ausgeführt. Daß bedeutet, es wird kein flexibles Material wie es Planen, Textilien oder Folien darstellen, an irgend einem Punkt verwendet. Die Oberflächen der Anlagenteile sind glatt ausgeführt, ohne Rillen oder Sicken.
Die Anlage erreicht ihre Effektivität als gesamtheitliches System im komplexen Zusammenwirken durch die konstruktive Ausgestaltung der aufgezeigten Baugruppen. Zusätzlich besteht auch noch die Möglichkeit, einen Vorverdichter in die Anlage einzubeziehen, um die Windgeschwindigkeit noch weiter zu erhöhen.
Ein Fach des Vorverdichters muß dazu mindestens zwei Einleitfächer der Anlage anströmen. Die an sich bekannte Variante der Energietanne hat durch die im unteren Bereich größere Ausladung auch die Funktion eines Vorverdichters. Zusätzlich kommt dabei eine Aufwärtsströmung an der Anlage zustande, welche aber keine negativen Auswirkungen bezüglich einer Leistungsminderung nach sich zieht.
Die aufgezeigte erfindungsgemäße Windkraftanlage kann auch auf einem Dach, oder auf einem Schiff installiert werden, wobei sie besonders in diesem Fall durch einen Fahrstuhl zweckdienlich zum Aus- oder Einfahren ausgestaltet werden kann. Beim Einsatz auf einem Schiff kann sich dabei sogar der Flettner-Effekt unter Umständen noch positiv auf die Fahrgeschwindigkeit auswirken.

Die Erfindung soll nachstehend an einem Ausführungsbeispiel näher erläutert werden.
In den zugehörigen Zeichnungen zeigen dazu:

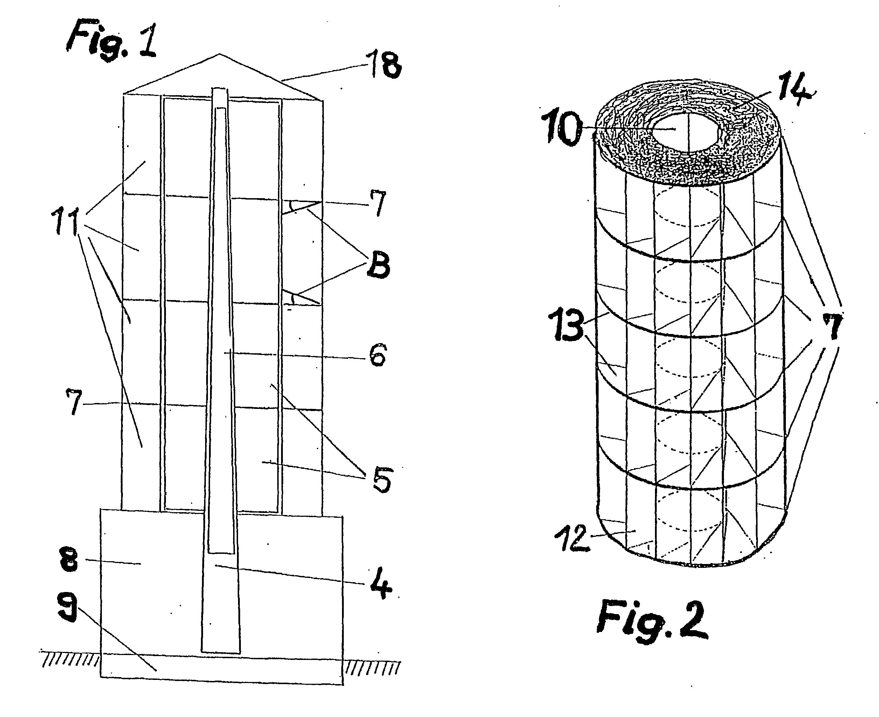

- Figur 1:: Schnitt der Windkraftanlage
- Figur 2:: Perspektivansicht der Einleitflächenstatik
- Figur 3:: Einleitflächenvarianten
- Figur 4:: Horizontalschnitt Rotor und Einleitflächenstatik
- Figur 5:: Schnitt Rotorflügel
- Figur 6:: Rotor mit etagenversetzten Flügelgruppen
- Figur 7:: Schnitt der vertikalen Einleitflächenelemente

Auf einem Fundament 9 ist ein achteckiger Maschinenraum 8, einer zylindrischen Einleitflächenkonstruktion 11, bestehend aus mehreren Etagen, angeordnet.

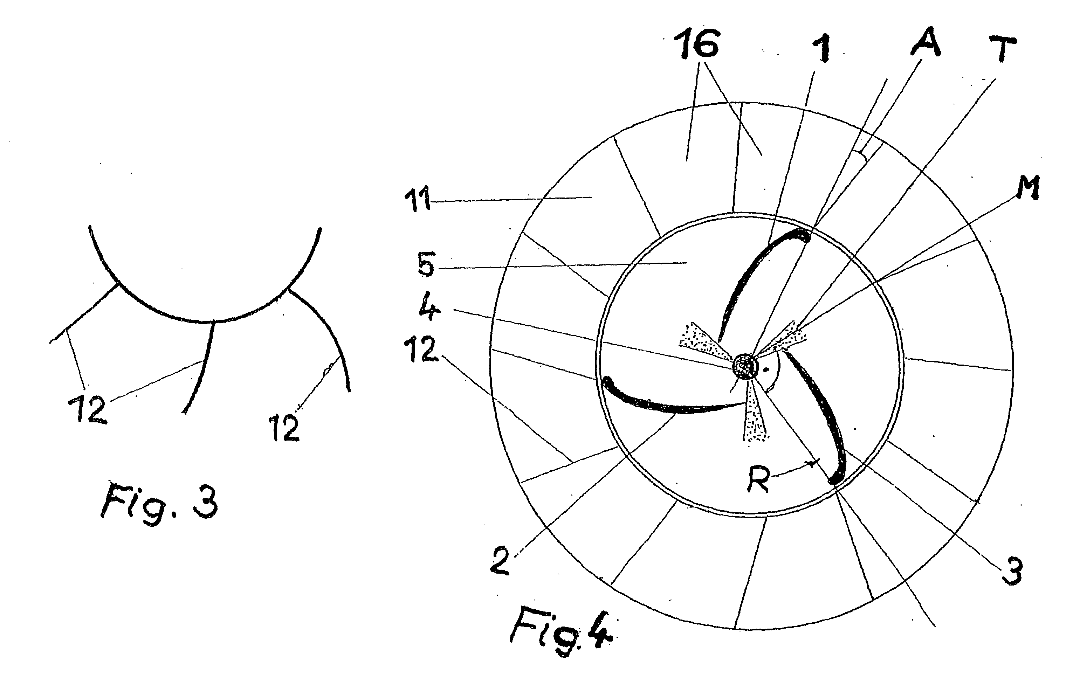

Ein Rotor 5 befindet sich mittig der Anlage, welcher zu der Einleitflächenkonstruktion 11 parallele Etagen aufweist. Die zylindrische Einleitflächenkonstruktion 11 sitzt auf dem Dach 18 des Maschinenraumes 8 auf. Die zylindrische Einleitflächenkonstruktion 11 besteht aus einem zylindrischen Einleitflächenaußenring 14, welcher eine unterschiedliche Anzahl von Etagen aufweisen kann. Jede Etage besteht aus einer Oberboden- und Unterbodenbegrenzung sowie horizontaler Einleitflächenelemente 13, worauf zwölf vertikale Einleitflächenelemente 12 angeordnet sind.
Diese horizontalen Einleitflächenelemente 13 und die zwölf vertikalen Einleitflächenelemente 12 sind die einzigen Statikteile zwischen den Etagen und bilden die Einleitfächer 16. Die Verbindung dieser Bauelemente erfolgt duch vorzugsweise Verschweißung. Mittig der Anlage befindet sich ein zylindrischer Schacht 10, welcher durch die gesamte Anlage bis hinunter auf den Maschinenraum 8 reicht. Die oberste Etage erhält als Abschluß ein vorzugsweise kegelförmiges Dach 18. Die zylindrische Einleitflächenkonstruktion 11 sitzt auf dem Maschinenraum 8. Im zylindrischen Schacht 10 ist die vertikale Rotoranlage angeordnet, bestehend aus dem Rotor 5, der Rotorachse 4, welche gleichzeitig den Generator 6 aufnimmt und den Etagenböden 7. Auf den Etagenböden 7 sind die Flügel 1, 2 und 3 je Etage angeordnet. Die Drehrichtung des Rotors 5 ist gegen den Uhrzeigersinn gerichtet. In jeder Etage der zylindrischen Einleitflächenkonstruktion 11 befinden sich oberhalb und unterhalb der Einleitfächer 16 je zwölf horizontale Einleitflächenelemente 13, welche sich in einer Spanne von 10° bis 15° zum Etagenboden befinden, als Anstellwinkel der horizontalen Einleitflächenelmente B. Diese geradflächigen horizontalen Einleitflächenelemente 13 steigen im besagten Winkelbereich von außen nach innen an, so daß es zur gewünschten Verdichtung der Strömung kommt. Die Öffnung 17 zwischen zwei Flügeln, welche zur Durchströmung vorhanden sein muß, bestimmt sich im Verhältnis zur Flügeltiefe L. Der fünffache Abstand von der Mitte der Rotorachse 4 bis zum Ende der Flügel 1, 2, 3 gemessen, bei mittlerem Maßwert M der Flügeltiefe L, ergibt mit einem Faden abgesteckt die Länge der äußeren Flügelkrümmung. In Figur 4 ist der ideale Flügeltiefenbereich T schraffiert kenntlich gemacht. Die Flügel 1, 2 und 3 besitzen an ihrer Frontseite eine gekrümmte Flügelnase 15. Die Aerodynamik arbeitet trotz der sich verändernden Anströmwinkel gleichbleibend. Der positive Effekt der gekrümmten Flügelnase 15 am vorderen Ende der Flügel 1, 2 , 3 wird auch noch wirksam bis zur leichten Nasenkrümmung, welche entgegengesetzt zur Drehrichtung verläuft. Auf diese Idealform reagiert auch der Segelzug sehr gut, wenn die Flügel 1, 2 oder 3 zur Anströmung in das Einleitfach 16 hineinfahren.

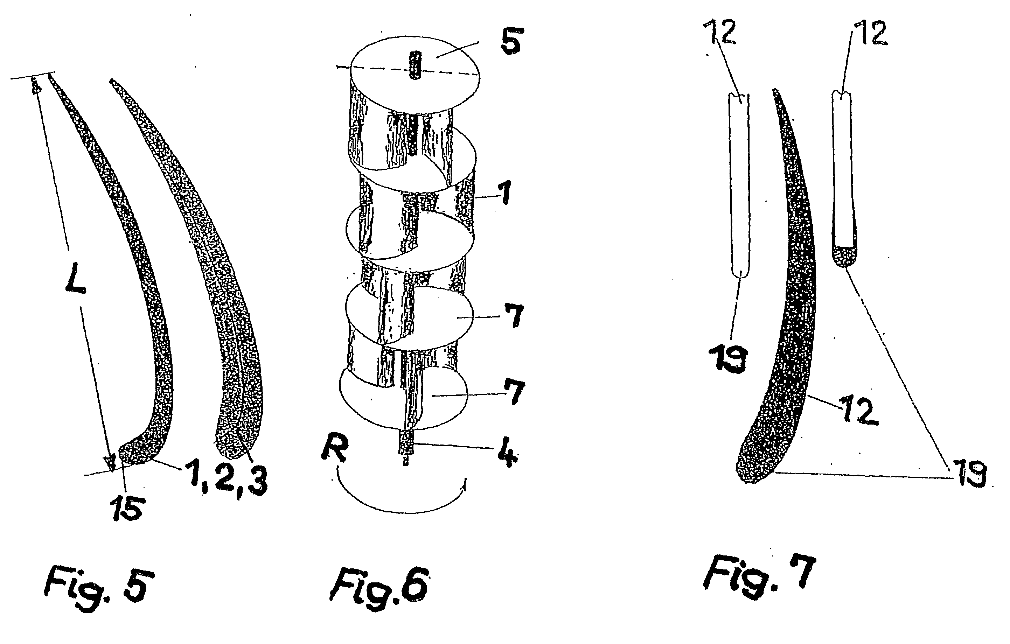

Die Flügel 1, 2 oder 3 müssen so ideal zueinander stehen, daß der Segelzug und die Aerodynamik die ideale Durchströmung durch den Wind ohne Behinderung gewährleistet. Die vertikalen Einleitflächenelemente 12 haben die besondere Aufgabe, die in der Windrichtung zurücklaufenden Rotorflügel 1, 2, 3 abzudecken und den Wind zusätzlich auf die positive Seite zu leiten. Durch einen Anstellwinkel A der vertikalen Einleitflächenelemente von etwa 36° bis 38° wird der Wind schon im Vorfeld auf die nachfolgende Rotation R vorbereitet. Bei einer Anordnung von zwölf vertikalen Einleitflächenelementen 12 wird der Anstellwinkel A derart ermittelt, daß die erste und vierte der vertikalen Einleitflächenelemente 12 einen Winkel von 90° ergeben und drei Einleitfächer 16 umfassen. Im Angriffsfeld der Windfläche an der Anlage arbeitet jeder Flügel 1, 2 und 3 im Rotor 5 nacheinander über vier Einleitfächer 16. Das hat den Vorteil, daß jedes Einleitfach 16 eine neue und höhere Anfangsgeschwindigkeit erhält.
Die erste Anfangsgeschwindigkeit wird durch den Restschwung des letzten Flügels 3 im letzten Arbeitsgang gebildet. Die zweite Anfangsgeschwindigkeit wird durch den ersten Arbeitsgang des Flügels 1 im ersten Einleitfach 16 realisiert. Die dritte Anfangsgeschwindigkeit wird durch den zweiten Arbeitsgang des Flügels 1 im zweiten Einleitfach 16 realisiert. Die vierte Anfangsgeschwindigkeit wird durch den dritten Arbeitsgang des Flügels 1 im dritten Einleitfach 16 realisiert. In den vier Einleitfächern 16 des Flügelarbeitsbereiches ist ein Anstieg des Energiepotentials in der Windkraftumsetzung zu verzeichnen. Während ständig, egal welcher Flügel arbeitet, zwei Einleitfächer 16 durch die Magnuseffekt-Strömung bedient werden, zeigt sich nachfolgend im hinteren, windabgewandten Bereich der Anlage der Diffusor-Effekt, der eine Folge des Magnuseffektes ist. Der Flettnereffekt übt lediglich eine Querkraft auf die Statik der Anlage aus. Diese wird jedoch erst wirksam, wenn die Windkraftanlage auf einem Schiff installiert ist.
Der Flettnereffekt trägt im Idealfall auf solche Weise zur Erhöhung der Fahrtgeschwindigkeit bei.
Die zweieinhalbfache Tiefe der vertikalen Einleitflächenelemente 12 entspricht dem Durchmesser des Rotors 5. Die vertikalen Einleitflächenelemente 12 sind in gerader Form, vorzugsweise leicht gekrümmter Form, oder auch gekrümmter Form ausgeführt, wie sie Figur 3 zeigt, wobei sie eine aerodynamische Ausgestaltung nach Figur 7 erfahren. Dabei ist die stärkste Krümmung gemäß Figur 3 nicht größer als die der Rotorflügel 1, 2, 3. An der Vorderseite der vertikalen Einleitflächenelemente 12 ist eine aerodynamische Aufwölbung 19 angebracht, wobei aber mindestens eine behelfsmäßige Rundung vorgenommen werden sollte. Die Figur 6 zeigt den Rotor 5 mit jeweils etagenversetzten Flügelgruppen im System von vier Etagen. Die Arbeitsweise des Rotors 5 mit seinen Flügeln 1, 2, 3 aus der Sicht eines einzigen bestimmten angeströmten Einleitfaches 16 ist wie folgt:
Wenn der Flügel 1 im ersten Arbeitsgang mit dem Rücken in das angströrnte Einleitfach 16 eintritt, wird er vom Segelzug sogartig angezogen. Da das gesamte Rotorfach noch leer ist, strömt die Luft ungehindert am hereinkommenden Flügel 1 vorbei und drückt zu fast 90° in die Innenkrümmung des vorhergehenden Flügels 2. Der schnelle Segelzug leitet die Anfangsgeschwindigkeit sofort an die Aerodynamik weiter und leitet den zweiten Arbeitsgang ein. Durch die Aerodynamik am Flügel 1 erhöht sich die Windgeschwindigkeit im Inneren des Rotors 5. Dadurch erfolgt ein schnelles Abkippen des nachfolgenden Flügels 2 von 90° auf 0° zur Strömungsrichtung und realisiert damit die nötige Durchströmung zur Aufrechterhaltung der optimal möglichen Windgeschwindigkeit. Im Moment des Auftreffens der Strömung von 90° am Flügel 2 erhält der letzte Flügel 3 eine kurzfristige Anströmung von etwa 45° durch die Mitte des Rotors 5 in der Art eines Druckimpulses. Die Aerodynamik arbeitet mit unterschiedlicher Kraft etwa zu 75% des Flügelweges im Einleitfach 16. Eine gekrümmte Flügelnase 15 an der Flügelkante erlaubt eine stets ideale Anströmung in einem gleitenden Arbeitswinkel in der Anströmung. Nachdem die Flügelkante das Einleitfach 16 verlassen hat, setzt der dritte Arbeitsgang ein, wobei der Winddruck auf den inneren Teil des Flügels 1 zu drücken beginnt. Der Strömungswinkel auf den Flügel 1, der sich aus der Durchströmungsrichtung aus dem Fach ergibt, beginnt von 0° bis 90° und nach der Rotation des Flügels 1 von 90° bis 0°. Von 0° bis 90° wird auch der nachfolgende Flügel 2 mit 45° angeströmt, wobei aber die maximale Durchströmung bis auf Null zurückfällt. Die stärkste Durchströmung wirkt bei 0° Anstellströmung im Innenbogen des Flügels 1 auf den nachfolgenden Flügel 2. In der letzten Phase des dritten Arbeitsganges führt der Flügel 1 noch 50% seiner Druckverarbeitung durch, wobei der neue Flügel 3 bereits neu mit den Kräften des Segelzuges im für die Betrachtung ausgewählten Einleitfach 16 die Arbeit aufnimmt. Da die Angriffsfläche des Windes auf die Anlage immer vier Einleitfächer 16 bedient, kommt es zu Strömungsunterstützungen und zur Maximalausnutzung der Kapazitäten der Flügel 1, 2 und 3 sowie der Durchströmung. Die Strömungsumsetzung wird an verschiedenen Stellen im Rotor 5 wirksam und kommt letztlich durch die einheitlich kompakte Bauweise des gesamten Rotorsystems ohne Verluste voll zum Tragen. Über die vier Einleitfächer 16 der Windangriffsfläche erhält der in Front stehende Flügel eine immer höhere Anfangsgeschwindigkeit und der Magnuseffekt arbeitet außer einer geringen Fächereinströmung hinter der Anlage ständig als Diffusor. Die Frequenzkonstanz wird durch die Flügelgruppenversetzung in den Etagen und durch den Schwungradeffekt erreicht. Je nach Etagenanzahl werden die Flügelgruppen auf die 360° des Umfangs aufgeteilt, woraus sich eine konstante Ideatflügelstellung für die günstigsten Wndkraftumsetzungen, die besonders bei Windgeschwindigkeiten ab 1,5 m/s zu arbeiten beginnen, ergibt. Die Rotorflächen, die Flächen der Flügel 1, 2, 3 und die Flächen der Einleitelemente 12, 13 sind starr und unbeweglich ausgeführt, weshalb keinerlei flexible Materialien Einsatz finden. Femer sind alle Oberflächen der Einleitflächenelemente 12, 13 absolut glatt ausgeführt, ohne Unterbrechungen, wie sie beispielsweise Sicken und Rillen verursachen.
Das gesamte System ist als eine Einheit zu betrachten, welches auf ein komplexes Zusammenwirken ausgerichtet ist. Die Veränderung eines Faktors, beziehungsweise konstruktiven Merkmals führt zwangsweise zum Absinken der Leistung, wodurch außerdem der schwingungsfreie Lauf der Anlage gestört wird. Bei orkanartigen Winden ist eine Überfüllung an Durchströmung in der Anlage nicht möglich, weil sich die Kraftumsetzung auf eine Konstante einpegelt, wodurch die beweglichen Teile geschützt werden.
Durch den spiralförmigen Druckaufbau des Rotors 5 über die einzelnen Etagen, der Mehrfächerbedienung der Einleitfächer 16, der verschiedenen Windenergieumsetzungsmöglichkeiten, der verschiedenen Anströmwinkel, der gleitenden Aerodynamik in der Rotation, die Unterstützung der Anfangsgeschwindigkeit aller Antriebskomponente in den einzelnen Arbeitsgängen sowie in Verbindung mit den hinter der Anlage arbeitenden Effekte, wird eine Zusammenarbeit zur maximalen Windkraftumsetzung bei Ausnutzung kleinster bis größter Windkräfte erreicht. Gleichzeitig wird eine hohe Laufruhe durch Ausgleich der Kräfte erzielt und durch die konstruktive Ausgestaltung für die Vermeidung punktartiger Angriffe durch Kräfte auf die Windkraftanlage gesorgt. Durch die konstruktiv erreichte Windrichtungsunabhängigkeit der Anlage gibt es keine Schwankungen durch zeitlich versetztes Nachführen. Durch einen herkömmlich bekannten Vorverdichter unterschiedlichster Ausführung kann die Windgeschwindigkeit insbesondere in windschwachen Gebieten noch weiter erhöht werden.

### Aufstellung der verwendeten Bezugszeichen

- 1 -: Flügel
- 2 -: Flügel
- 3 -: Flügel
- 4 -: Rotorachse
- 5 -: Rotor
- 6 -: Generator
- 7 -: Etagenboden
- 8 -: Maschinenraum
- 9 -: Fundament
- 10 -: zylindrischer Schacht
- 11 -: Einleitflächenkonstruktion
- 12 -: vertikales Einleitflächenelement
- 13 -: horizontales Einleitflächenelement
- 14 -: Einleitflächenaußenring
- 15 -: Flügelnase
- 16 -: Einleitfach
- 17 -: Öffnung (zwischen den Flügeln)
- 18 -: Dach
- 19 -: Aufwölbung
- T -: Flügeltiefenbereich
- R -: Rotation
- L -: Flügeltiefe
- A -: Anstellwinkel (der vertikalen Einleitflächenelemente)
- B -: Anstellwinkel (der horizontalen Einleitflächenelemente)
- M -: mittlerer Meßwert

## Patentansprüche

1. Windkraftanlage mit Vertikalrotor auf dem Grundprinzip der Durchströmung arbeitend, mit einer Einleitflächenkonstruktion (11) und einem gegen den Uhrzeigersinn laufenden Rotor (5) ausgestattet, **dadurch gekennzeichnet, daß** der Rotor (5) mehretagig ausgestaltet ist und mit drei aerodynamisch ausgestalteten Flügeln (1,2,3) je Etage ausgestattet ist, welcher die Windzufuhr über eine mehretagige Einleitflächenkonstruktion (11) erhält, die zwölf vertikale Einleitflächenelemente (12) je Etage aufweist, welche radial mit einem Anstellwinkel der vertikalen Einleitflächenelemente (A) im Bereich von 36° bis 38° so angeordnet sind, daß der besagte Winkelbereich von innen nach außen auf der in Drehrichtung (R) abgewandten Seite von der Kreismittellinie abweicht.

2. Windkraftanlage nach Anspruch 1 **dadurch gekennzeichnet, daß** diese ein Maschinenraum (8) aufweist, welches auf einem Fundament (9) aufsitzt und sich auf dem Maschinenraum (8) ein turmartiger Aufbau in Form der Einleitflächenkonstruktion (11) befindet, die mit einem vorzugsweise kegelförmigen Dach (18) nach oben abschließt und daß ein zylinderförmiger Schacht (10) den Rotor (5) mit seiner Anlage aufnimmt.

3. Windkraftanlage nach Anspruch 1 **dadurch gekennzeichnet, daß** die einzelnen Etagen der Einleitflächenkonstruktion (11) durch die Etagenböden (7) abgeteilt sind, wobei auf der Oberseite und der Unterseite der Etagenböden (7) horizontale Einleitflächenelemente (13) angeordnet sind, welche in Richtung Rotor (5) eine steigende Schräge aufweisen, die als Anstellwinkel (B) der horizontalen Einleitflächenelemente (13) im Vorzugsbereich von 10° bis maximal 15° ausgelegt ist

4. Windkraftanlage nach Anspruch 1 und 3 **dadurch gekennzeichnet, daß** in den einzelnen Etagen der Einleitflächenkonstruktion (11) durch die jeweils zwölf radial in einem Anstellwinkel angeordneten vertikalen Einleitflächenelemente (12) mit den oberen und unteren horizontalen Einleitflächenelementen (13) je Etage Einleitfächer (16) gebildet werden, die der Windzufuhr des Rotors (5) dienen.

5. Windkraftanlage nach Anspruch 1 **dadurch gekennzeichnet, daß** der Rotor (5) eine bis zum Maschinenraum (8) durchgehende Rotorachse (4) aufweist, welche einen Generator (6) aufnimmt.

6. Windkraftanlage nach Anspruch 1 und 4 **dadurch gekennzeichnet, daß** die vertikalen Einleitflächenelemente (12) mit einer vorzugsweisen leichten Innenkrümmung in Richtung des Anstellwinkels (A) ausgestattet sind und ihre vertikale Außenkante eine aerodynamische Aufwölbung (19) aufweist.

7. Windkraftanlage nach Anspruch 1 **dadurch gekennzeichnet, daß** diese mit einem zylindrischen Einleitflächenaußenring (14) ausgestattet ist, welcher eine Ausladung aufweist, welche einem Drittel des Durchmessers des Rotors (5) entspricht.

8. Windkraftanlage nach Anspruch 1 **dadurch gekennzeichnet, daß** die Abmessungen des Profiles der vertikalen Einleitflächenelemente (12) durch das Verhältnismaß fixiert werden, welches eine Länge von 70 cm, eine untere Wölbung von 6 cm sowie an der stärksten Stelle seiner aerodynamischen Ausgestaltung ein Maß von 7 cm aufweist.

9. Windkraftanlage nach Anspruch 3 **dadurch gekennzeichnet, daß** die ebenflächig ausgeführten horizontalen Einleitflächenelemente (13) von außen nach innen ansteigend, jeweils einen Anstellwinkel der horizontalen Einleitflächenelemente (B) von 10° bis 15° vom Etagenboden (7) aus, aufweisen.

10. Windkraftanlage nach Anspruch 1 **dadurch gekennzeichnet, daß** jede Etage des Rotors (5) eine Gruppe von drei aerodynamisch ausgestalteten Flügeln (1, 2, 3) aufweist, wobei entsprechend der Etagenzahl die Gruppen der Flügel (1, 2, 3) auf die Gradzahl des Umtangs von 360° aufgeteilt sind.

11. Windkraftanlage nach Anspruch 1 und 10 **dadurch gekennzeichnet, daß** diese mit vorzugsweise vier Etagen ausgebildet ist, wobei jede Gruppe der dreiaerodynamisch ausgestalteten Flügel (1, 2, 3) mit 90° etagenversetzt angeordnet ist.

12. Windkraftanlage nach Anspruch 1, 10 und 11 **dadurch gekennzeichnet, daß** der Rotor (5) für jede Etage diese abteilende Etagenböden (7) besitzt, zwischen welchen jeweils drei aerodynamisch ausgestaltete Flügel (1, 2, 3) angeordnet sind.

13. Windkraftanlage nach Anspruch 1 **dadurch gekennzeichnet, daß** die Flügel (1, 2, 3) des Rotors (5) mit einer aerodynamisch ausgebildeten Flügelnase (15) ausgestattet sind.

14. Windkraftanlage nach Anspruch 1 **dadurch gekennzeichnet, daß** die Flügeltiefe (L) sich als von der Flügelnase (15) gezogene Linie bis zur Mitte der Rotorachse (4) und der nach außen gezogenen Linie zu 90° von der Rotorachse (4) aus, den mittleren Meßwert (M) der profilierten Flügeltiefe (L) ergibt.

## Claims

1. Wind power station with vertical rotor operating on the cross-flow principle, with an intake area structure (11) and an anti-clockwise running rotor (5), **characterized in that** the rotor (5) is of multilevel design and equipped with three aerodynamically designed blades (1, 2, 3) per level, which receives the wind supply via a multilevel intake area structure (11) that shows twelve vertical intake area elements (12) per level which are arranged in a radial manner at a pitch angle of the vertical intake area elements (A) between 36 ° and 38° so that the said range of angles from inside to the outside deviates from the center line of circle on the opposite side in direction of rotation ( R).

2. Wind power station according to Claim 1 **characterized in that** this plant shows a power room (8) which is seated on a foundation, and a tower-like structure in the form of the intake area structure (11) arranged onto the power room (8) which ends on the top with a preferably conical roof (18), and a cylindrical shaft (10) accomodates the rotor (5) and its installation.

3. Wind power station according to Claim 1 **characterized in that** the individual levels of the intake area structure (11) are partitioned off by the level plates (7) with the upper and the lower side of these level plates (7) being provided with horizontal intake area elements (13) the inclination of which showing an increase in the direction of the rotor (5), which are designed as pitch angles (B) of the horizontal intake area elements (13) in a preferred range of 10° up to maximum 15°.

4. Wind power station according to Claims 1 and 3 **characterized in that** on the individual levels of the intake area structure (11) inlet compartments (16) are formed by the twelve vertical intake area elements (12) each radially arranged at a pitch angle with the upper and lower horizontal intake area elements (13) of each level, which serve for the wind supply to the rotor (5).

5. Wind power station according to Claim 1 **characterized in that** the rotor (5) shows a continuous rotor axle (4) down to the power room (8) which accomodates a generator (6).

6. Wind power station according to Claims 1 and 4 **characterized in that** the vertical intake area elements (12) are provided with a preferably slight internal bend in the direction of the pitch angle (A) and its vertical outer edge shows an aerodynamic arching (18).

7. Wind power station according to Claim 1 **characterized in that** this plant is provided with a cylindrical inlet area outer ring (14) which shows a projection that corresponds to one third of the diameter of rotor (5).

8. Wind power station according to Claim 1 **characterized in that** the dimensions of the profiles of the vertical intake area elements (12) are fixed by the proportional measure which shows a length of 70 cm, a lower bend of 6 cm and at the thickest point of its aerodynamic design a dimension of 7 cm.

9. Wind power station according to Claim 3 **characterized in that** the horizontal intake area elements (13) of plane design show, ascending from outside to inside, a pitch angle of the horizontal intake area elements (B) of 10° to 15 ° from the level plate (7).

10. Wind power station according to Claim 1 **characterized in that** each level of the rotor (5) shows a group of three aerodynamically designed blades (1, 2, 3), where depending on the number of levels the groups of blades (1, 2, 3) are distributed to the circumference of 360°.

11. Wind power station according to Claims 1 and 10 **characterized in that** this station is preferably equipped with four levels where each group of the aerodynamically designed blades (1, 2, 3) is levelwise staggered by 90°.

12. Wind power station according to Claims 1, 10 and 11 **characterized in that** the rotor (5) possesses for each level these partitioning level plates (7) between which three aerodynamically designed blades (1, 2, 3) each are arranged.

13. Wind power station according to Claim 1 **characterized in that** the blades (1, 2, 3) of the rotor (5) are provided with an aerodynamically designed blade nose (15).

14. Wind power station according to Claim 1 **characterized in that** the blade depth (L) as the line drawn from the blade nose (15) to the center of the rotor axle (4) and the line drawn to the outside at 90° from the rotor axle (4), provides for the mean measured value (M) of the profiled blade depth (L).

## Revendications

1. Génératrice éolienne dotée de rotors verticaux, travaillant selon le principe fondamental d'écoulement continu (11), et équipée d'un rotor fonctionnant dans le sens inverse des aiguilles d'une montre (5). Elle est **caractérisée par le fait que** le rotor (5) est équipé pour plusieurs jours et est doté de 3 ailes aérodynamiques (1, 2, 3) sur chaque étage. Cet étage contient une alimentation en vent se trouvant au-dessus d'une construction de surface d'introduction prévue pour plusieurs jours (11) qui comporte 12 éléments verticaux de surface d'introduction (12) sur chaque étage, rangés de façon radiale avec un angle de calage des éléments de surface d'introduction (A) dans un domaine allant de 36° à 38° de telle manière que ladite zone angulaire allant de l'intérieur vers l'extérieur sur le côté opposé au sens de rotation (R) dévie de la ligne du centre de cercle.

2. Génératrice éolienne répondant à la revendication 1 **caractérisée par le fait qu'**elle possède un local de machinerie (8) reposant sur une fondation (9) ainsi que **par le fait qu'**une construction en forme de tour se trouve dans le local de machinerie (8) sous la forme d'une construction de surface d'introduction se fermant par le haut de préférence par un toit conique (18). Cette génératrice se caractérise également **par le fait que** la cheminée de forme cylindrique (10) comprend le rotor (5) et son dispositif.

3. Génératrice éolienne répondant à la revendication 1 **caractérisée par le fait que** chaque étage de la construction de surface d'introduction (11) est divisé par des coudes d'étages (7) bien que les éléments horizontaux de surface d'introduction (13) soient rangés sur la surface supérieure et inférieure des coudes d'étages (7). Ces éléments possèdent un biseau croissant vers la direction du rotor (5) qui représente l'angle de calage (B) des éléments horizontaux de surface d'introduction (13) au sein d'une zone de préférence allant de 10° à 15° maximum.

4. Génératrice éolienne répondant aux revendications 1 et 3 **caractérisée par le fait que** des surfaces d'introduction se forment à chaque étage de la construction de surface d'introduction (11) à l'aide de chacun des 12 éléments verticaux de surface d'introduction (12) rangés de manière radiale au sein d'un angle de calage ainsi que les éléments verticaux de surface d'introduction supérieurs et inférieurs (13) de chaque étage. Ces surfaces d'introduction servent à l'alimentation en vent du rotor (5).

5. Génératrice éolienne répondant à la revendication 1 **caractérisée par le fait que** le rotor (5) possède un axe de rotor (4) allant jusqu'au local de machinerie (8). Cet axe contient un générateur.

6. Génératrice éolienne répondant aux revendications 1 et 4 **caractérisée par le fait que** les éléments verticaux de surface d'introduction (12) sont équipés de préférence d'une légère courbure interne allant dans la direction de l'angle de calage (A) et que leur rebord externe vertical possède un équipement aérodynamique (19).

7. Génératrice éolienne répondant à la revendication 1 **caractérisée par le fait qu'**elle est équipée d'une virole extérieure cylindrique pour les surfaces d'introduction (14) ayant un rayon d'action correspondant à un tiers du diamètre du rotor (5).

8. Génératrice éolienne répondant à la revendication 1 **caractérisée par le fait que** les mesures du profil des éléments horizontaux de surface d'introduction (12) sont fixées par la mesure de rapport. Cette mesure de rapport a 70 cm de longueur, une courbure inférieure de 6 cm ainsi qu'une surface de 7 cm sur le côté le plus fort de son équipement aérodynamique.

9. Génératrice éolienne répondant à la revendication 1 **caractérisée par le fait que** chaque élément horizontal de surface d'introduction (13) réalisé sur le même niveau et s'accroissant de l'extérieur vers l'intérieur possède un angle de calage des éléments horizontaux des surfaces d'introduction (B) allant de 10° à 15 °à partir du sol des étages (7).

10. Génératrice éolienne répondant à la revendication 1 **caractérisée par le fait que** chaque étage du rotor (5) possède un groupe de trois ailettes équipées de manière aérodynamique (1, 2, 3). Il va de soi que le groupe des ailettes (1, 2, 3) est réparti en fonction du nombre de degrés de la surface de 360° tout en respectant le nombre d'étages.

11. Génératrice éolienne répondant aux revendications 1 et 10 **caractérisée par le fait que** celle-ci est composée de préférence de quatre étages. Chaque groupe des trois ailettes équipées de manière aérodynamique (1, 2, 3) est placé de telle manière qu'il puisse se dévier de 90°.

12. Génératrice éolienne répondant aux revendications 1, 10 et 11 **caractérisée par le fait que** le rotor (5) possède pour chaque étage ce sol de séparation entre lequel se trouvent trois ailettes équipées de manière aérodynamique (1, 2, 3).

13. Génératrice éolienne répondant à la revendication 1 **caractérisée par le fait que** les ailettes (1, 2, 3) du rotor (5) sont équipées d'un radiateur de bord d'attaque (15) construit de manière aérodynamique.

14. Génératrice éolienne répondant à la revendication 1 **caractérisée par le fait que** la profondeur des ailettes (L) est utilisée comme valeur de mesure moyenne (M) de la profondeur d'ailettes profilée (L) à partir de la ligne partant du radiateur de bord d'attaque (15) jusqu'au centre de l'axe du rotor (4) jusqu'à la ligne allant vers l'extérieur à 90 ° de l'axe du rotor (4).
